# EUROPÄISCHE PATENTSCHRIFT

(11) **EP 1 099 058 B1**
(45) Veröffentlichungstag und Bekanntmachung des Hinweises auf die Patenterteilung: **10.11.2004**
(21) Anmeldenummer: 00936722.8
(22) Anmeldetag: 09.05.2000
(51) Int. Cl.: F16C 11/06

(54) **KUGELGELENK**
BALL-AND-SOCKET JOINT
JOINT A ROTULE

(30) Priorität: 21.05.1999 DE 19923320
(43) Veröffentlichungstag der Anmeldung: 16.05.2001
(73) Patentinhaber: Walter Bethke Kunststoffverarbeitung Elektronik GmbH & Co. KG, 41189 Mönchengladbach (DE)
(72) Erfinder: WILLEMSEN, Reinhard, D-41238 Mönchengladbach (DE)
(74) Vertreter: Grundmann, Dirk, Dr.
(86) Internationale Anmeldenummer: PCT/EP2000/004124
(87) Internationale Veröffentlichungsnummer: WO 2000/071902

(56) Entgegenhaltungen:
- DE-U- 29 620 495
- DE-U- 29 714 531
- GB-A- 1 177 633
- US-A- 5 562 357
- US-A- 5 676 485

## Beschreibung

Die Erfindung betrifft ein Kugelgelenk gemäß dem Oberbegriff des Anspruchs 1, wie z.B. aus DE-A-297 14 531 bekannt ist.

Derartige Kugelgelenke sind im Stand der Technik bekannt. Das erste Gelenkteil, welches die Gelenkschale ausbildet, besitzt am Schalenrand eine Einziehung, so daß eine Hinterschneidung gegeben ist. Das zweite Gelenkteil bildet eine Kugelfläche aus. Diese Kugelfläche ist zufolge der Hinterschneidung in der Schale geklipst gehalten und gleitend in der Gelenkschale gelagert. Zufolge eines den Äquator der Gelenkkugel übergreifenden, die Hinterschneidung bildenden Randes sitzt das zweite Gelenkteil fest am ersten Gelenkteil.

Der Erfindung liegt die Aufgabe zugrunde, ein gattungsgemäßes Kugelgelenk gebrauchsvorteilhaft und fertigungstechnisch günstig weiterzubilden.

Gelöst wird die Aufgabe durch die im Anspruch 1 angegebene Merkmale. Der Anspruch 1 stellt insbesondere darauf ab, daß im Krümmungszentrum der Gelenkschale eine Rastkugel angeordnet ist, welche mit einem durchmessergeringeren Hals mit dem Zentrum der Schale materialeinheitlich verbunden ist. Dabei ist eine Rastöffnung in der Kugelfläche vorgesehen, deren lichte Weite geringer ist als der Kugeldurchmesser, wobei die Rastöffnung mit ihrer sich nach außen hin trichterförmig erweiternden Wandung eine Spreizfläche ausbildet zur Aufweitung der Rastkugel bis auf ein den Äquator der Rastkugel überschnappenden Durchmesser, wobei sich der Wandung öffnungsseitig Rastgleitflächen anschließen, die von der konzentrisch dazu verlaufenden Kugelfläche um mindestens die Halslänge beabstandet sind. Zufolge dieser Ausgestaltung ist ein einfach zu montierendes Kugelgelenk gegeben. Zwischen der Rastkugel und der Gelenkschale befindet sich ein ringförmiger Spalt, dessen Wände von Flächen ausgebildet werden, die einen gemeinsamen Krümmungsmittelpunkt besitzen. In diesen Spalt tritt ein ringförmig hinterschnittener Körper ein, dessen eine Wandung in der Schale gleitet und dessen dazu rückwärtige Wandung an der Kugelfläche entlanggleitet. Der Schwenkwinkel des Kugelgelenks wird vorzugsweise durch den Öffnungswinkel der die Spreizflächen ausbildenden Wandung und durch den Halsdurchmesser bestimmt. Die Schwenkendstellung ist erreicht, wenn diese Wandung an den Hals anstößt. Der Hals hat vorzugsweise einen kreisförmigen Querschnitt. Der Öffnungswinkel der Wandung ist so gewählt, daß in den Schwenkendstellungen eine linienförmige Berührung zwischen Wandung und Hals vorliegt. Die Bemaßung des Halses ist so gewählt, daß die Rastkugel die Kugelfläche immer mit Spannung in die Gelenkschale zieht. Im Hals herrscht dann eine ständige Spannung zwischen seinem im Schalenzentrum liegenden Fuß und seinem Übergang in die Rastkugel.

Im Stand der Technik ist ferner ein Kugelgelenk, bestehend aus einem ersten Gelenkteil und einem zweiten Gelenkteil vorbekannt, wobei das erste Gelenkteil eine Gelenkschale ausbildet und das zweite Gelenkteil eine Kugelfläche. Im Zentrum der Gelenkschale befindet sich dort eine Bohrung. In dieser Bohrung steckt ein Nietzapfen, welcher bis in eine Öffnung des zweiten Gelenkteiles hineinragt. Diese Öffnung weitet sich nach innen hin zu Gleitflächen auf. Auf diesen Gleitflächen gleitet ein rückwärtig auf den Niet aufgesteckter Blattfederkörper, welcher die beiden Gelenkteile auch aneinander hält. Die Montage dieses insgesamt vierteiligen Gelenkstückes ist umständlich. Eine Montage durch Überschnappen ist damit nicht möglich.

Eine Weiterbildung der Erfindung sieht vor, daß das zweite Gelenkteil als Einsteckteil in ein Rohr ausgebildet ist. Vom Rohr wird die in der Rastöffnung eingeschnappt gehaltene Kugel zumindest bereichsweise überlappt. Hierdurch ist eine formschlüssige Halterung der Kugel in der Rastöffnung gewährleistet. Vorzugsweise werden die beiden Gelenkteile aus Kunststoff gefertigt. Trotz der komplexen Gestalt des ersten Gelenkteiles wird die Ausbildung als Spritzgußteil bevorzugt. Das auf das zweite Gelenkteil aufgesteckte Stahlrohr bildet, wenn es die Kugel bereichsweise überlappt, eine Abzugssicherung, da die Rastöffnung zufolge der Umfangsfesselung durch das Stahlrohr gegen Aufweiten gesichert ist. Eine weitere bevorzugte Ausgestaltung der Erfindung sieht eine zur Rastkugel rückwärtige Ausnehmung im ersten Gelenkteil vor. Diese Ausnehmung dient vorzugsweise zur Aufnahme eines eine Standfläche ausbildenden Einsatzteiles. Diese Ausgestaltung ist insbesondere dann zweckmäßig, wenn das Gelenkstück als Gelenkgleiter für ein Stuhlbein ausgebildet ist. Die Ausnehmung besitzt vorzugsweise Hinterschneidungen. Zufolge der Hinterschneidung muß das erste Gelenkstück nach seiner Spritzguß-Formgebung dort zwangsentformt werden. Hierdurch ist eine Entformungskraft notwendig. Dies ist deshalb von Vorteil, weil die die Rastkugel ausbildenden Spritzwerkzeug-Schalenabschnitte ebenfalls vom Spritzling zwangsentformt werden müssen. Während dieser Zwangsentformung kann der Spritzling mit seiner bodenseitigen Ausnehmung noch an der Form gehaltert sein, so daß sichergestellt ist, daß beide in den Ringraum eingreifenden Formschalen sicher vom Spritzling entfernt werden können. Der Ansatzpunkt der Kugel am Hals kann vom Rand der Gelenkschale überragt sein. Die Halslänge kann aber auch so gewählt sein, daß der Hals den Rand der Gelenkschale überragt.

Ausführungsbeispiele der Erfindung werden anhand beigefügter Zeichnungen nachfolgend erläutert. Es zeigen:
- Fig. 1: ein erstes Ausführungsbeispiel der Erfindung im Schnitt, wobei das erste Gelenkteil mit dem zweiten Gelenkteil in Rastverbindung steht,
- Fig. 2: eine Darstellung gemäß Fig. 1, wobei die beiden Gelenkteile zueinander verschwenkt sind,
- Fig. 3: eine Darstellung gemäß Fig. 2, wobei über das die Kugelfläche ausbildende Gelenkteil ein Stahlrohr geschoben ist,
- Fig. 4: ein zweites Ausführungsbeispiel in einer Darstellung gemäß Fig. 1 mit aufgestecktem Stahlrohr,
- Fig. 5: eine Darstellung gemäß Fig. 4 mit verschwenkten Gelenkteilen,
- Fig. 6: das die Kugelfläche ausbildende Gelenkteil und
- Fig. 7: das die Gelenkschale ausbildende Gelenkteil,
- Fig. 8: eine Darstellung gemäß der Linie VIII-VIII in Fig. 4.

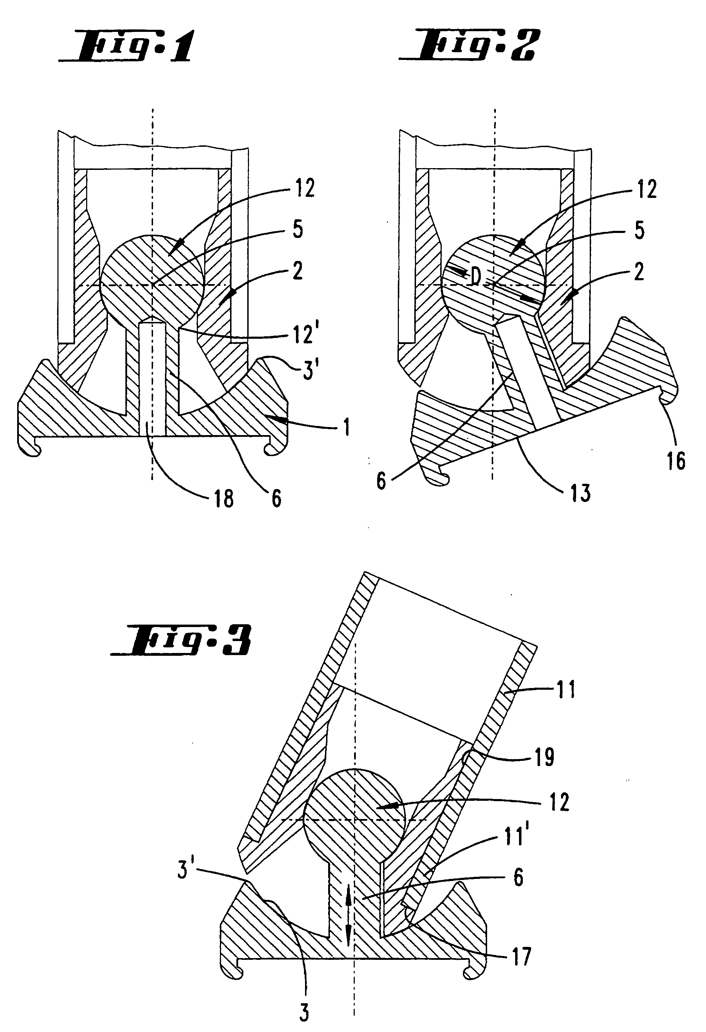

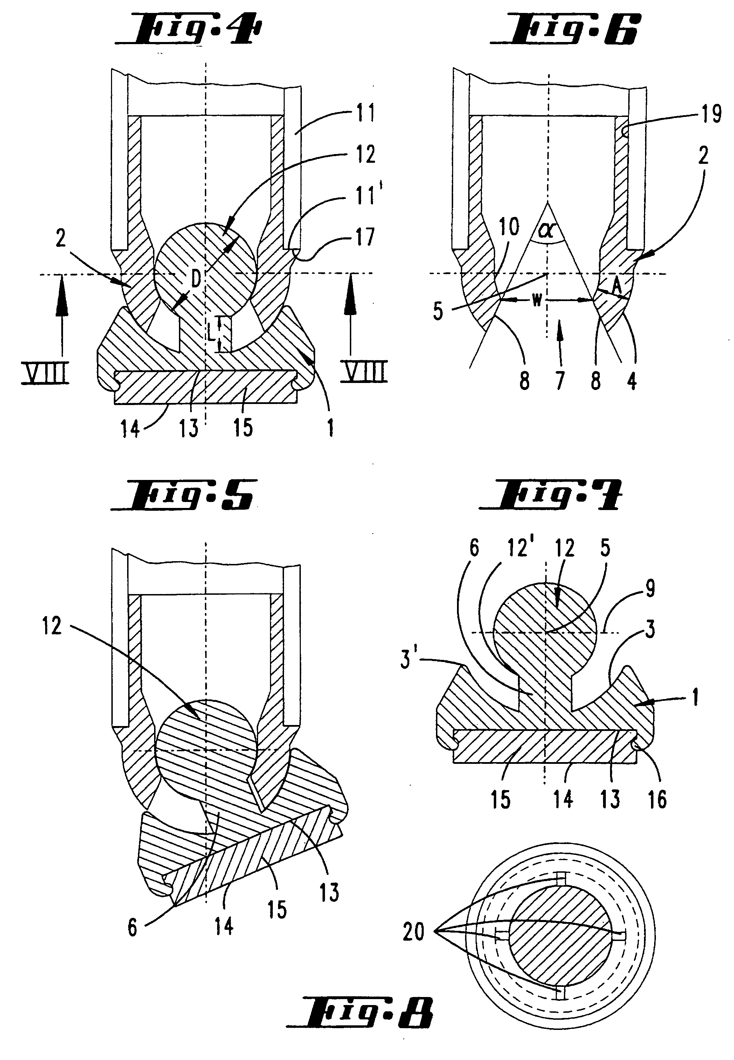

Bei dem in den Fig. 1 bis 3 dargestellten ersten Ausführungsbeispiel wird das Kugelgelenk von einem ersten Gelenkteil 1 und einem zweiten Gelenkteil 2 ausgebildet. Das erste Gelenkteil 1 bildet eine Gelenkschale 3 aus. Im Zentrum der Gelenkschale 3 fußt ein Hals 6, der die Form eines Kreiszylinders besitzt und eine Länge L aufweist. Auf dem Hals 6 sitzt eine Kugel 12, wobei der Ansatz 12' der Kugel 12 zum Hals 6 oberhalb des Niveaus des Randes 3' der Gelenkschale 3 liegt. Das Zentrum 5 der Kugel 12 ist gleichzeitig das Krümmungszentrum der Gelenkschale 3.

Rückwärtig des Halses 6 bildet das erste Gelenkteil 1 eine Ausnehmung 13 aus. Diese Ausnehmung ist kreisförmig und dient zur Aufnahme eines Einsteckteiles 15, welches eine Standfläche 14 ausbildet. Das Einsteckteil 15 ist in die Ausnehmung 13 eingeklipst. Hierzu dient ein randseitiger, einwärts gerichteter Wulst 16, der eine Hinterschneidung ausbildet.

Der Hals 6 kann beim Ausführungsbeispiel eine in die Ausnehmung 13 mündende Höhlung in Form einer Bohrung 18 ausbilden. Der Boden der Bohrung 18 liegt etwa auf dem Niveau des Kugelansatzes 12'.

Das zweite Gelenkteil 2 bildet an seinem einen Ende eine Kugelfläche 4 aus. Diese Kugelfläche 4 ist ringförmig und beläßt in axialer Mitte eine Rastöffnung 7 mit trichterförmigen Wandungen 8. Die lichte Weite W der Rastöffnung 7 ist kleiner als der Durchmesser D der Kugel 12. Jenseits des Abschnittes ihrer lichten Weite setzt sich die Wandung 8 in Rastgleitflächen 10 fort. Der radiale Abstand A zwischen der Rastgleitfläche 10 und der Kugelfläche 4 ist geringfügig größer als die Länge L des Halses.

Die größte Öffnungsweite der mit ihrer Wandung 8 Spreizflächen ausbildenden Rastöffnung ist größer als der Durchmesser D der Kugel. Wird das zweite Gelenkteil mit der Rastöffnung auf die Kugel aufgesetzt und in Achsrichtung eine Kraft ausgeübt, so gleitet die freie Kugelhälfte auf der Spreizfläche 8 und weitet die Öffnung 7 so weit aus, daß sie über den Äquator 9 der Kugel schnappt. Die Rastgleitflächen 10 hintergreifen dann die halsseitige Kugelhälfte rastend, wobei die Kugelfläche 4 sich kraftbeaufschlagt auf der Gelenkschale 3 abstützt. Zufolge des Längenverhältnisses des Halses 6 und des Abstandes A drückt die Kugel 12 auf die Rastgleitflächen 10, so daß die beiden Gelenkteile reibschlüssig in unterschiedlichen Schwenkstellungen gehalten werden können.

Die Schwenkstellungen werden begrenzt durch den Durchmesser des Halses 6 und den Öffnungswinkel Alpha der schräg verlaufenden Wandung 8. Der Wandungsverlauf bzw. der Öffnungswinkel Alpha der Wandung ist so gewählt, daß in der Schwenkendstellung die Wandung 8 in linienförmige Anlage tritt an den Hals 6.

Das zweite Gelenkteil bildet einen zylinderförmigen Außenwandabschnitt 19 aus, welcher durch eine ringförmige Schulter 17 begrenzt ist. Die Schulter 17 liegt bei diesem Ausführungsbeispiel in der Gestrecktlage der beiden Gelenkteile 1, 2 auf dem Niveau des Halses 6. Wird auf diesen Wandungsabschnitt 19 ein Stahlrohr 11 aufgeschoben, so überlappt das Stahlrohr den Abschnitt der Wandung 8 im Bereich ihres geringsten Durchmessers w. Eine Aufweitung der Rastöffnung 7 ist dadurch unterbunden.

In dem in den Fig. 4 bis 7 dargestellten zweiten Ausführungsbeispiel liegt der Ansatzpunkt 12' unterhalb des Randes 3' der Gelenkschale 3. Die Länge L des Halses 6 ist hier kürzer als beim ersten Ausführungsbeispiel. Dementsprechend ist auch der Abstand A zwischen Rastgleitflächen und Kugelfläche 4 geringer als beim ersten Ausführungsbeispiel. Ansonsten stimmt die Rastverbindung im wesentlichen mit derjenigen des ersten Ausführungsbeispiels überein, weshalb auf die diesbezüglichen Teile der Beschreibung des ersten Ausführungsbeispiels verwiesen wird.

Auch das zweite Ausführungsbeispiel besitzt einen zylindrischen Wandabschnitt 19 am zweiten Gelenkteil, welcher von einer Stufe 17 in Achsrichtung begrenzt wird und auf welchen wandabschnitt 19 ein Stahlrohr in Form eines Stuhlbeines aufsteckbar ist. Beim zweiten Ausführungsbeispiel liegt die Schulter 17 jedoch im Bereich der freien Hälfte der Kugel 12, also oberhalb ihres Äquators 9.

Die Rastgleitflächen 10 können durch in Achsrichtung verlaufende Kerben oder Schlitze materialgeschwächt sein. Dies erleichtert das Überschnappen der Rastöffnung 7 über den Äquator 9 der Kugel 12.

Entsprechend einer nicht dargestellten weiteren Variante kann auch vorgesehen sein, daß anstelle des Einsteckteiles 15 das erste Gelenkteil einstückig ausgebildet ist mit einem flachen, gegebenenfalls zum Rand hin abgerundeten Boden aus Kunststoff.

Ebenfalls kann vorgesehen sein, daß am Boden des ersten Gelenkteiles 1 anstelle eines Einsteckteiles 15 ein aufgeklipstes Stahlteil vorgesehen ist. Anstelle des radial einwärts gerichteten Wulstes 16 kann dann ein radial auswärts gerichteter Wulst vorgesehen sein, welcher von der Edelstahlkappe überklipst wird.

## Patentansprüche

1. Kugelgelenk in Form eines in Steckrastverbindung mit einem eine Gelenkschale (3) ausbildenden ersten Gelenkteil (1) stehenden, eine in der Gelenkschale (3) gleitend gelagerte Gelenkkugelfläche (4) aufweisenden zweiten Gelenkteil (2), wobei ein Gelenkteil eine auf einem Hals (6) sitzende Kugel ausbildet, welcher Hals aus der Mitte einer mit dem Hals materialeinheitlich verbundenen Schale ragt, und die Kugel eine Öffnung durchragt, deren Weite (W) geringer ist als der Kugeldurchmesser (D), **dadurch gekennzeichnet, daß** die Kugel dem die Gelenkschale (3) aufweisenden Gelenkteil zugeordnet und als Rastkugel (12) ausgebildet ist und die Öffnung eine in der Gelenkkugelfläche (4) angeordnete Rastöffnung (7) ist, die mit ihrer sich nach außen hin trichterförmig aufweitenden Wandung (8) eine Spreizfläche ausbildet, zur Aufweitung der Rastöffnung (7) bis auf einen den Äquator (9) der Rastkugel (12) überschnappenden Durchmesser, wobei sich der Wandung (8) öffnungsinnenseitig eine Rastgleitfläche (10) für die Rastkugel (12) anschließt, die von der konzentrisch dazu verlaufenden, den Rand der Rastöffnung (7) bildenden Gelenkkugelfläche (4) um mindestens die Halslänge (L) beabstandet ist.

2. Kugelgelenk nach Anspruch 1, **dadurch gekennzeichnet, daß** der Öffnungswinkel (Alpha) der Wandung (8) dem durch den Halsdurchmesser limitierten Schwenkwinkel des Kugelgelenkes entspricht.

3. Kugelgelenk nach einem oder mehreren der vorhergehenden Ansprüche, **dadurch gekennzeichnet, daß** das zweite Gelenkteil (2) als Einsteckteil in ein Rohr (11) ausgebildet ist mit einem die in der Rastöffnung (7) eingeschnappt gehaltene Kugel (12) zumindest bereichsweise überlappenden Einsteckabschnitt (11').

4. Kugelgelenk nach einem oder mehreren der vorhergehenden Ansprüche, **dadurch gekennzeichnet, daß** das die Gelenkschale (3) ausbildende erste Gelenkteil (1) eine rückwärtig des Halses (6) offene Ausnehmung (13) ausbildet.

5. Kugelgelenk nach einem oder mehreren der vorhergehenden Ansprüche, **gekennzeichnet durch** ein in die Ausnehmung eingesetztes, eine Standfläche (14) ausbildendes Einsteckteil (15).

6. Kugelgelenk nach einem oder mehreren der vorhergehenden Ansprüche, **dadurch gekennzeichnet, daß** die zum Hals (6) rückwärtige Ausnehmung (13) einen eine Hinterschneidung bildenden einwärts gezogenen Wulst (16) ausbildet.

7. Kugelgelenk nach einem oder mehreren der vorhergehenden Ansprüche, **dadurch gekennzeichnet, daß** das erste Gelenkteil (1) rückwärtig des Halses (6) einen ebenen, bevorzugt randseitig abgerundeten Boden besitzt.

8. Kugelgelenk nach einem oder mehreren der vorhergehenden Ansprüche, **dadurch gekennzeichnet, daß** der ansonsten ebene Boden des ersten Gelenkteiles (1) einen radial auswärts gerichteten Wulst ausbildet, zum Überklipsen einer Stahlkappe.

## Claims

1. Ball-and-socket joint in the form of a second joint part (2) which is in insertion detent connection with a first joint part (1), first joint part (1) forming a joint cup (3), second joint part (2) having a spherical joint surface (4), spherical joint surface (4) being mounted in a sliding manner in the joint cup (3), one part of the joint forming a ball sitting on a neck (6) which protrudes out of the centre of a cup connected to the neck to form a single part consisting of the same material, and the ball protruding through an opening of a width (W) which is less than the diameter (D) of the ball, **characterized in that** the ball is associated with the joint part having the joint cup (3) and is formed as a detent ball (12), and the opening is a detent opening (7) which is located in the spherical joint surface (4) and forms a widening surface with its wall (8) that expands outwards in the shape of a funnel, for enlarging the detent opening (7) to a diameter which snaps over the equator (9) of the detent ball (12), whereby a detent sliding surface (10) for the detent ball (12) adjoins the wall (8) on the inside of the opening and is located at a distance which is equal to at least the length (L) of the neck from the spherical joint surface (4) extending concentrically thereto and forming the edge of the detent opening (7).

2. Ball-and-socket joint according to Claim 1, **characterized in that** the opening angle (alpha) of the wall (8) corresponds to the pivoting angle of the ball-and-socket joint, limited by the diameter of the neck.

3. Ball-and-socket joint according to one or more of the preceding claims, **characterized in that** the second joint part (2) is formed as an insert part in a tube (11), with an insert portion (11') overlapping at least in a certain region the ball (12) held snap-fitted in the detent opening (7).

4. Ball-and-socket joint according to one or more of the preceding claims, **characterized in that** the first joint part (1), forming the joint cup (3), forms a recess (13) open to the rear of the neck (6).

5. Ball-and-socket joint according to one or more of the preceding claims, **characterized by** an insert part (15) inserted into the recess and forming a standing surface (14).

6. Ball-and-socket joint according to one or more of the preceding claims, **characterized in that** the recess (13) to the rear of the neck (6) forms an inwardly drawn bead (16), forming an undercut.

7. Ball-and-socket joint according to one or more of the preceding claims, **characterized in that** the first joint part (1) has, to the rear of the neck (6), a planar base, preferably rounded off at the edges.

8. Ball-and-socket joint according to one or more of the preceding claims, **characterized in that** the otherwise planar base of the first joint part (1) forms a radially outwardly directed bead, to be clipped over by a steel cap.

## Revendications

1. Joint à rotule sous la forme d'une deuxième pièce de joint (2) en liaison d'arrêt par emboîtement avec une première pièce de joint (1) formant une coquille de joint (3), la deuxième pièce de joint (2) comportant une surface sphérique de joint (4) logée de manière à glisser dans la coquille de joint (3), dans lequel une pièce du joint forme une rotule placée sur un col (6), ce col dépassant du milieu d'une coquille reliée au cou par un matériau identique et la rotule dépasse à travers un orifice dont la largeur (W) est inférieure au diamètre (D) de la rotule,
**caractérisé en ce que** la rotule est associée à la pièce du joint comportant la coquille du joint (3) et est conçue sous forme de rotule d'arrêt (12) et **en ce que** l'orifice est un orifice d'arrêt (7) disposé dans la surface sphérique du joint (4) qui forme avec sa paroi (8) qui s'élargit vers l'extérieur en forme d'entonnoir une surface d'écartement, pour l'élargissement de l'orifice d'arrêt (7) jusqu'à un diamètre qui chevauche l'équateur (9) de la rotule d'arrêt (12), une surface de glissement d'arrêt (10) pour la rotule d'arrêt (12) étant raccordée à la paroi (8) de côté intérieur de l'orifice, et qui est écartée d'au moins la longueur de col (L) de la surface sphérique de joint (4), qui forme le bord de l'orifice d'arrêt (7) et qui s'en écarte de manière concentrique.

2. Joint à rotule selon la revendication 1, **caractérisé en ce que** l'angle d'ouverture (Alpha) de la paroi (8) correspond à l'angle de pivotement du joint à rotule limité par le diamètre du col.

3. Joint à rotule selon une ou plusieurs des revendications précédentes, **caractérisé en ce que** la deuxième pièce du joint (2) est conçue comme pièce à emboîter dans un tube (11) avec une section d'emboîtement (11') qui chevauche au moins en partie la rotule (12) tenue dans l'orifice d'arrêt (7) par enclenchement.

4. Joint à rotule selon une ou plusieurs des revendications précédentes, **caractérisé en ce que** la première pièce du joint (1) qui forme la coquille du joint (3) forme un évidement (13) ouvert au dos du col (6).

5. Joint à rotule selon une ou plusieurs des revendications précédentes, **caractérisé par** une pièce à emboîter (15) insérée dans l'évidement et formant une surface d'appui (14).

6. Joint à rotule selon une ou plusieurs des revendications précédentes, **caractérisé en ce que** l'évidemment (13) au dos du col (6) forme un bourrelet (16) s'étendant vers l'intérieur et qui forme une contre-dépouille.

7. Joint à rotule selon une ou plusieurs des revendications précédentes, **caractérisé en ce que** la première pièce du joint (1) présente au dos du col (6) un fond plan aux bords de préférence arrondis.

8. Joint à rotule selon une ou plusieurs des revendications précédentes, **caractérisé en ce que** le fond normalement plan de la première pièce du joint (1) forme un bourrelet dirigé radialement vers l'extérieur permettant de clipser un capuchon en acier.
